(19)

**Europäisches Patentamt**
**European Patent Office**
**Office européen des brevets**

(11) **EP 4 625 519 A1**

(12) **EUROPEAN PATENT APPLICATION**

(43) Date of publication:
01.10.2025 Bulletin 2025/40

(21) Application number: 25164375.5

(22) Date of filing: 18.03.2025

(51) International Patent Classification (IPC):
$H01M\ 4/13^{(2010.01)}$    $H01M\ 4/133^{(2010.01)}$
$H01M\ 4/1393^{(2010.01)}$    $H01M\ 4/36^{(2006.01)}$
$H01M\ 4/587^{(2010.01)}$    $H01M\ 4/62^{(2006.01)}$
$H01M\ 4/66^{(2006.01)}$    $H01M\ 10/052^{(2010.01)}$
$H01M\ 10/0562^{(2010.01)}$

(52) Cooperative Patent Classification (CPC):
H01M 4/1393; H01M 4/133; H01M 4/364;
H01M 4/587; H01M 4/622; H01M 4/623;
H01M 4/661; H01M 4/667; H01M 10/052;
H01M 10/0562; H01M 2300/0068

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 18.03.2024 JP 2024042389

(71) Applicant: **GS Yuasa International Ltd.**
**Kisshoin, Minami-ku,**
**Kyoto-shi, Kyoto 601-8520 (JP)**

(72) Inventors:
• **ISHIBASHI, Yuki**
**Kyoto-shi, Kyoto 601-8520 (JP)**
• **YABUKI, Akinori**
**Kyoto-shi, Kyoto 601-8520 (JP)**
• **ITAMI, Yuya**
**Kyoto-shi, Kyoto 601-8520 (JP)**

(74) Representative: **Isarpatent**
**Patent- und Rechtsanwälte Partg mbB**
**Friedrichstraße 31**
**80801 München (DE)**

(54) **ALL-SOLID-STATE ENERGY STORAGE DEVICE AND METHOD FOR MANUFACTURING ALL-SOLID-STATE ENERGY STORAGE DEVICE**

(57) An all-solid-state energy storage device according to an aspect of the present invention includes a positive electrode that includes a positive active material layer, the positive active material layer containing a sulfur-based active material, conductive carbon, a sulfide solid electrolyte, and a binder, and the positive active material layer having a content of the binder of 0.1 mass% or more and less than 2.0 mass%.

**EP 4 625 519 A1**

**Description**

FIELD

The present invention relates to an all-solid-state energy storage device and a method for manufacturing an all-solid-state energy storage device.

BACKGROUND

Nonaqueous electrolyte secondary batteries typified by lithium ion secondary batteries are, due to their high energy density, often used for electronic devices such as a personal computer and a communication terminal, and motor vehicles, and the like. The nonaqueous electrolyte secondary batteries generally include a pair of electrodes electrically separated from each other, and a nonaqueous electrolyte interposed between the electrodes, and are configured to be charged or dis charged by transference of charge transport ions between the two electrodes. As energy storage devices other than the nonaqueous electrolyte secondary batteries, capacitors such as a lithium ion capacitor and an electric double-layer capacitor are also widely in use.

In recent years, all-solid-state energy storage devices have been proposed in which a solid electrolyte such as a sulfide solid electrolyte, an oxide solid electrolyte, and a polymer solid electrolyte is, as a nonaqueous electrolyte, used in place of a nonaqueous electrolyte solution obtained by dissolving an electrolyte salt in a liquid such as an organic solvent.

As regards a positive electrode, a positive electrode including a high-capacity sulfur-based active material has been developed. However, the sulfur-based active material has a problem of being easily dissolved in a nonaqueous electrolyte solution. The all-solid-state energy storage devices including a solid electrolyte do not have this problem of dissolving a sulfur-based active material, and therefore, the all-solid-state energy storage devices are promising as a technique of applying a sulfur-based active material. Here, in consideration of productivity and the like, the manufacturing of a positive electrode is preferably performed by preparing a positive composite paste (also referred to as a slurry or the like), and applying the paste to a substrate. JP 2020-119761 A describes a method for manufacturing a positive electrode for an all-solid-state lithium sulfur battery, the method including using a slurry for a positive electrode, the slurry containing a sulfur-containing positive active material, a solid electrolyte, a binder, and a solvent. A binder is not sometimes used when a positive active material layer is formed, for example, by pressing a powdery positive composite. However, a binder is normally needed to bind an active material and the like when a positive active material layer is formed by applying a positive composite paste.

An all-solid-state energy storage device sometimes has an insufficient charge capacity when the device includes a positive electrode that includes a positive active material layer formed as described above using a positive composite paste containing a sulfur-based active material and a binder.

SUMMARY

An object of the present invention is to provide: an all-solid-state energy storage device having a high charge capacity, the all-solid-state energy storage device including a positive electrode that includes a positive active material layer containing a sulfur-based active material and a binder; and a method for manufacturing such an all-solid-state energy storage device.

An all-solid-state energy storage device according to an aspect of the present invention includes a positive electrode that includes a positive active material layer, the positive active material layer containing a sulfur-based active material, conductive carbon, a sulfide solid electrolyte, and a binder, and the positive active material layer having a content of the binder of 0.1 mass% or more and less than 2.0 mass%.

BRIEF DESCRIPTION OF DRAWINGS

FIG. 1 shows a schematic sectional view of an all-solid-state energy storage device according to one embodiment of the present invention.
FIG. 2 shows a schematic sectional view of an all-solid-state energy storage device according to an embodiment different from the all-solid-state energy storage device in FIG. 1.
FIG. 3 shows a diagram illustrating an energy storage apparatus configured by putting together a plurality of all-solid-state energy storage devices according to the one embodiment of the present invention.

DESCRIPTION OF EMBODIMENTS

An all-solid-state energy storage device according to an aspect of the present invention includes a positive electrode that includes a positive active material layer, the positive active material layer containing a sulfur-based active material, conductive carbon, a sulfide solid electrolyte, and a binder, and the positive active material layer having a content of the binder of 0.1 mass% or more and less than 2.0 mass%.

A method for manufacturing an all-solid-state energy storage device according to another aspect of the present invention includes applying a positive composite paste onto a substrate directly or with an intermediate layer interposed therebetween, the positive composite paste containing a sulfur-based active material, conductive carbon, a sulfide solid electrolyte, and a binder, and the positive composite paste having, with respect to all solid content thereof, a content of the binder of less than 2.0 mass%.

According to any one of the aspects of the present invention, there can be provided: an all-solid-state energy storage device having a high charge capacity, the all-solid-state energy storage device including a positive electrode that includes a positive active material layer containing a sulfur-based active material and a binder; and a method for manufacturing such an all-solid-state energy storage device.

First, outlines of an all-solid-state energy storage device and a method for manufacturing an all-solid-state energy storage device disclosed in the present specification will be described.

[1] An all-solid-state energy storage device according to an aspect of the present invention includes a positive electrode that includes a positive active material layer, the positive active material layer containing a sulfur-based active material, conductive carbon, a sulfide solid electrolyte, and a binder, and the positive active material layer having a content of the binder of 0.1 mass% or more and less than 2.0 mass%.

The all-solid-state energy storage device according to [1] is an all-solid-state energy storage device including a positive electrode that includes a positive active material layer containing a sulfur-based active material and a binder, and the all-solid-state energy storage device has a high charge capacity. The reasons therefor are not clear, but the following reasons are assumed. The binder is a component necessary for binding an active material and the like contained in a positive composite paste applied. In the cases of a nonaqueous electrolyte solution energy storage device including a nonaqueous electrolyte solution, a positive active material layer generally contains at least about 3 mass% of a binder to sufficiently bind an active material and the like. In the cases of the nonaqueous electrolyte solution energy storage device, even when the binder covers a sulfur-based active material, the nonaqueous electrolyte solution, for example, permeates the covering of the binder, and thereby, the reaction area between the sulfur-based active material and the nonaqueous electrolyte solution is sufficiently secured, enabling good charge-discharge performance to be exhibited. In contrast, in the cases of an all-solid-state energy storage device including a solid electrolyte, the solid electrolyte cannot, for example, permeate the covering of a binder, making it impossible for the part of a sulfur-based active material covered with the binder to contribute to charge-discharge. Therefore, even when the content of the binder is about 3 mass%, the all-solid-state energy storage device has a low charge capacity. In the all-solid-state energy storage device according to [1], the positive active material layer has a content of the binder of 0.1 mass% or more and less than 2.0 mass%, and therefore, the area of the sulfur-based active material covered with the binder is small, and resultantly, it is assumed that the all-solid-state energy storage device has a high charge capacity.

The "all-solid-state energy storage device" refers to an energy storage device substantially consisting of only solid constituent members. In the all-solid-state energy storage device, a volatile component may remain, for example, in a positive active material layer formed by application and drying of a positive composite paste. The all-solid-state energy storage device may be a nonaqueous electrolyte energy storage device including only a solid electrolyte as a nonaqueous electrolyte, or may be a nonaqueous electrolyte energy storage device including no nonaqueous electrolyte solution.

[2] In the all-solid-state energy storage device according to [1], the positive active material layer may further contain a volatile component having a boiling point at 1 atm of 220°C or lower, and the volatile component may have a polar term $\delta_p$ as a Hansen solubility parameter of 7.0 $(J/cm^3)^{1/2}$ or less.

Normally, when the positive active material layer is formed by applying a positive composite paste, the volatile component as a solvent contained in the positive composite paste remains in the positive active material layer even after drying. In the all-solid-state energy storage device according to [2], the positive active material layer is formed of a positive composite paste containing a low-polarity solvent having a polar term $\delta_p$ as a Hansen solubility parameter of 7.0$(J/cm^3)^{1/2}$ or less, and the all-solid-state energy storage device has a higher charge capacity. This is assumed to be because the use of a low-polarity solvent can suppress the decrease in ion conductivity of the sulfide solid electrolyte caused by a reaction thereof with the solvent.

The type of the volatile component in the positive active material layer can be identified by Gas Chromatography-Mass spectrometry (GC-MS). Specifically, the identification will be performed as follows. (1) Collection of volatile component

First, an all-solid-state energy storage device is disassembled, and a positive active material layer is taken out and impregnated with an appropriate extraction solvent (for example, toluene and hexane). The extraction solvent with which the positive active material layer has been impregnated is stirred by an ultrasonic treatment or the like to extract a volatile component contained in the positive active material layer into the extraction solvent. Further, by removing, through filtration, solid components (an active material, a binder, and the like) derived from the positive active material layer, the volatile component diluted in the extraction solvent is collected, and a measurement solution is thus obtained. (2) GC-MS

As a GC-MS analyzer, "GCMS-TQ8040" manufactured by SHIMADZU CORPORATION is used. As a carrier gas, helium is used.

The measurement sample (volatile component) is subjected to GC-MS analysis. Components contained in the sample are each predicted from the MS spectrum of each of the peaks of the gas chromatogram obtained. The known samples of the predicted components are subjected to GC-MS analysis. The retention time and the MS spectrum of the peak corresponding to each of the predicted components of the measurement sample are compared with the retention time and the MS spectrum of the peak of each of the known samples of the predicted components, and when there is a coincidence therebetween, the prediction is presumed to be correct. The extraction solvent is not taken into consideration.

The values of a dispersion term $\delta_d$, a polar term $\delta_p$, and a hydrogen bond term $\delta_h$ as Hansen solubility parameters (HSP values) are calculated as follows.

On the basis of the chemical structure of the compound (volatile component) to be calculated, the HSP values (dispersion term $\delta_d$, polar term $\delta_p$, and hydrogen bond term $\delta_h$) are calculated through structure calculation. For the calculation, the Y-MB method in the DYI program of Hansen Solubility Parameters in Practice (HSPiP) ver. 5.4.03 is used.

[3] In the all-solid-state energy storage device according to [1] or [2], the positive electrode may further include: a substrate including a metal aluminum layer in at least a part thereof; and an intermediate layer that is disposed between the substrate and the positive active material layer, and contains a carbon material.

In the all-solid-state energy storage device according to [3], an intermediate layer containing a carbon material is disposed between the substrate and the positive active material layer in the positive electrode, and therefore, even though the content of the binder in the positive active material layer is small, the adhesiveness between the substrate and the positive active material layer is high. In the cases of a nonaqueous electrolyte solution energy storage device, even when a positive electrode includes such an intermediate layer but the content of a binder in a positive active material layer is small, for example, 0.1 mass% or more and less than 2.0 mass%, the adhesiveness between a substrate and the positive active material layer tends to be insufficient. In contrast, the positive active material layer of the all-solid-state energy storage device according to [3] tends to have a smaller specific surface area than the specific surface area of the positive active material layer of the nonaqueous electrolyte solution energy storage device, enabling the binder to, even with a small amount, be sufficiently present on the surface of particles, and sufficiently bind the particles, and thus, the adhesiveness between the substrate and the positive active material layer is considered to be increased. The positive active material layer of the all-solid-state energy storage device according to [3] contains a sulfide solid electrolyte, and, for example, because the sulfide solid electrolyte itself has a small specific surface area and the sulfide solid electrolyte that is relatively flexible fills pores present in the positive active material layer, the positive active material layer is considered to have a smaller specific area than the specific surface area of the positive active material layer of the nonaqueous electrolyte solution energy storage device.

[4] In the all-solid-state energy storage device according to [2], the positive electrode may further include: a substrate including a metal aluminum layer in at least a part thereof; and an intermediate layer that is disposed between the substrate and the positive active material layer, and contains a carbon material, the intermediate layer may further contain a resin, and a Hansen sphere formed by plotting a Hansen solubility parameter of the resin in a Hansen space may encompass no coordinates of Hansen solubility parameters of the volatile component.

In the all-solid-state energy storage device according to [4], an intermediate layer containing a carbon material is disposed between the substrate and the positive active material layer in the positive electrode, and therefore, even though the content of the binder in the positive active material layer is small, the adhesiveness between the substrate and the positive active material layer is high. Further, in the all-solid-state energy storage device according to [4], a Hansen sphere formed by plotting a Hansen solubility parameter of the resin contained in the intermediate layer in a Hansen space encompasses no coordinates ($\delta_d$, $\delta_p$, $\delta_h$) of Hansen solubility parameters of the volatile component in the positive active material layer. This means that the resin contained in the intermediate layer is less likely to be dissolved in the volatile component in the positive active material layer, that is, a solvent in a positive composite paste used. In the all-solid-state energy storage device according to [4], the intermediate layer contains such a resin, and therefore, the resin in the intermediate layer is less likely to be dissolved when the positive active material layer is provided, and the adhesiveness between the substrate and the positive active material layer can further be increased.

The Hansen sphere of the resin can be determined by the HSP values ($\delta_d$, $\delta_p$, $\delta_h$) of the resin, which are the center coordinates, and an interaction radius $R_0$. When being unknown, the HSP values of the resin and the interaction radius $R_0$ can be calculated by the following method. A plurality of pure substances having known HPS values are plotted in a Hansen solubility parameter space determined by plotting HSP values ($\delta_d$, $\delta_p$, $\delta_h$) in a three-dimensional space, a Hansen sphere is determined by the presence or absence of solubility of an evaluation sample in the pure substances, and the HSP values of the resin can be calculated by obtaining the center values of the Hansen sphere. When the HSP values of the resin are calculated by obtaining the center values of a Hansen sphere, the Sphere program of HSPiP ver. 5.4.03 is used. The interaction radius $R_0$ that is a radius of a Hansen sphere can also be calculated using the software.

[5] In the all-solid-state energy storage device according to [4], values of a dispersion term $\delta_d$, the polar term $\delta_p$, and a hydrogen bond term $\delta_h$ as Hansen solubility parameters of the volatile component may respectively satisfy all ranges of 20.0 $(J/cm^3)^{1/2}$ or less, 7.0 $(J/cm^3)^{1/2}$ or less, and 7.0 $(J/cm^3)^{1/2}$ or less.

In the all-solid-state energy storage device according to [5], the positive active material layer contains the volatile component that satisfies the Hansen solubility parameters described above, that is, the positive active material layer is formed of a positive composite paste containing a solvent that satisfies the Hansen solubility parameters described above. The solvent that satisfies the Hansen solubility parameters described above is a good solvent that has low reactivity to a sulfide solid electrolyte, and that is relatively high in, for example, performance of dissolving a binder generally used for a positive active material layer containing a sulfide solid electrolyte. Therefore, the all-solid-state energy storage device according to [5] enables the binder in the positive active material layer to, even with a small amount, exert good binding properties, enabling, for example, a further increase in the charge capacity and a further increase in the adhesiveness between the substrate and the positive active material layer.

[6] In the all-solid-state energy storage device according to [4] or [5], the resin may have no solubility in at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof.

The carboxylic acid ester, the ketone, the trifluoroalkylbenzene containing a $CF_3$ group at an end thereof, and a bis(trifluoroalkyl)benzene containing a $CF_3$ group at an end thereof are solvents having high performance of dissolving the binder used for the positive active material layer. In the all-solid-state energy storage device according to [6], a resin having a low solubility in the above-described solvents each particularly suitable as a solvent of a positive composite paste is used as the resin of the intermediate layer, and therefore, the dissolution of the resin of the intermediate layer is further suppressed, enabling a further increase in the adhesiveness between the substrate and the positive active material layer.

The phrase "have no solubility" refers to having a degree of solubility (largest amount dissolved in 100 g of solvent) at 20°C of 0.1 g/100 g or less.

[7] In the all-solid-state energy storage device according to any one of [2] and [4] to [6], the volatile component may include at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof.

In the all-solid-state energy storage device according to [7], a solvent having high performance of dissolving the binder is used as the volatile component, that is, a solvent of the positive composite paste used, and therefore, the binder can, even with a small amount, exert particularly excellent binding properties, enabling, for example, a further increase in the charge capacity and a further increase in the adhesiveness between the substrate and the positive active material layer.

[8] In the all-solid-state energy storage device according to any one of [1] to [7], the binder may be a polymer containing no double bond.

In the all-solid-state energy storage device according to [8], a polymer containing no double bond is used as the binder for the positive active material layer, enabling, for example, a further increase in the charge capacity and a further increase in the adhesiveness between the substrate and the positive active material layer. This is assumed to be because the polymer containing no double bond is less likely to react with the sulfur-based active material, and is therefore less likely to cause a decrease in charge-discharge performance, binding properties, and the like.

[9] In the all-solid-state energy storage device according to [8], the binder may be a fluororesin.

The all-solid-state energy storage device according to [9] enables, for example, a further increase in the charge capacity and a further increase in the adhesiveness between the substrate and the positive active material layer.

[10] A method for manufacturing an all-solid-state energy storage device according to another aspect of the present invention includes applying a positive composite paste onto a substrate directly or with an intermediate layer interposed therebetween, the positive composite paste containing a sulfur-based active material, conductive carbon, a sulfide solid electrolyte, and a binder, and the positive composite paste having, with respect to all solid content thereof, a content of the binder of less than 2.0 mass%.

The method for manufacturing an all-solid-state energy storage device according to [10] enables manufacturing of an all-solid-state energy storage device having a high charge capacity, the all-solid-state energy storage device including a positive electrode that includes a positive active material layer containing a sulfur-based active material and a binder.

[11] In the method for manufacturing an all-solid-state energy storage device according to [10], the positive composite paste may further contain a solvent, and the solvent may have a polar term $\delta_p$ as a Hansen solubility parameter of 7.0 $(J/cm^3)^{1/2}$ or less.

The method for manufacturing an all-solid-state energy storage device according to [11] enables, for example, a further increase in the charge capacity of the all-solid-state energy storage device obtained.

An all-solid-state energy storage device according to one embodiment of the present invention, a method for manufacturing an all-solid-state energy storage device, an energy storage apparatus, and other embodiments will be described in detail. It is to be noted that the names of the constituent members (constituent elements) described in the embodiments are in some cases different from the names of the constituent members (constituent elements) described in BACKGROUND.

<All-solid-state energy storage device>

An all-solid-state energy storage device according to one embodiment of the present invention includes an electrode assembly including a positive electrode, a negative electrode, and a solid electrolyte layer, and a case that houses the electrode assembly. Normally, the electrode assembly is of layered type in which a positive electrode and a negative electrode are stacked with a solid electrolyte layer interposed therebetween. The positive electrode includes a substrate (hereinafter, the substrate of the positive electrode is also referred to as a "positive substrate") and a positive active material layer disposed on the positive substrate directly or with an intermediate layer interposed therebetween. The negative electrode includes a substrate (hereinafter, the substrate of the negative electrode is also referred to as a "negative substrate") and a negative active material layer disposed on the negative substrate directly or with an intermediate layer interposed therebetween. The electrode assembly may be of so-called "bipolar type" in which a positive active material layer is disposed on one surface of a substrate and a negative active material layer is disposed on the other surface of the substrate. The all-solid-state energy storage device according to the one embodiment of the present invention may be an all-solid-state secondary battery.

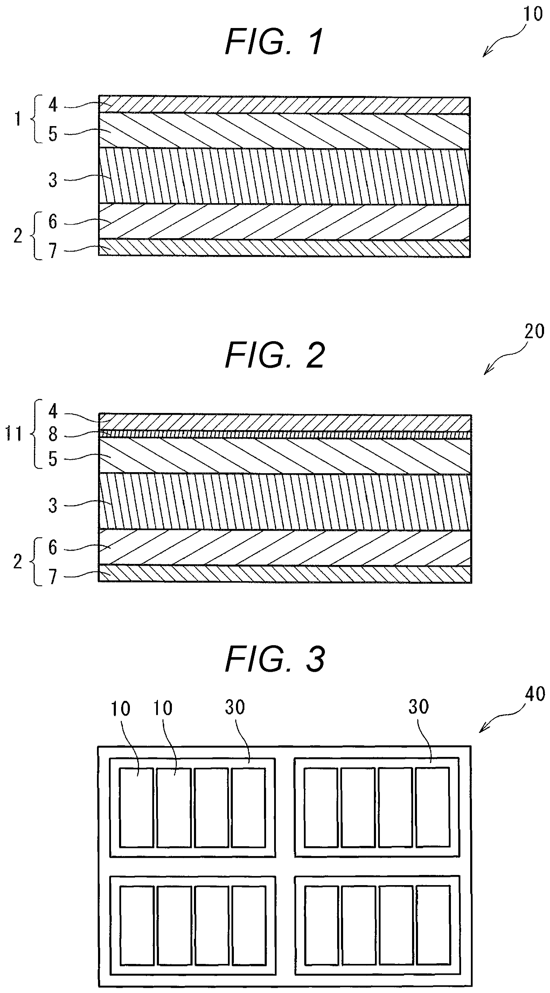

FIGS. 1 and 2 each show one example of the structure of an all-solid-state energy storage device. An all-solid-state energy storage device 10 in FIG. 1 has a structure in which a positive electrode 1 and a negative electrode 2 are stacked with a solid electrolyte layer 3 interposed therebetween. The positive electrode 1 includes a positive substrate 4 and a positive active material layer 5. The negative electrode 2 includes a negative substrate 7 and a negative active material layer 6. In the all-solid-state energy storage device 10 shown in FIG. 1, the negative active material layer 6, the solid electrolyte layer 3, the positive active material layer 5, and the positive substrate 4 are stacked in this order on the negative substrate 7.

An all-solid-state energy storage device 20 in FIG. 2 has a structure in which a positive electrode 11 and a negative electrode 2 are stacked with a solid electrolyte layer 3 interposed therebetween. The positive electrode 11 includes a positive substrate 4, an intermediate layer 8, and a positive active material layer 5. The negative electrode 2 includes a negative substrate 7 and a negative active material layer 6. In the all-solid-state energy storage device 20 shown in FIG. 2, the negative active material layer 6, the solid electrolyte layer 3, the positive active material layer 5, the intermediate layer 8, and the positive substrate 4 are stacked in this order on the negative substrate 7.

Hereinafter, constituent members and the like of the all-solid-state energy storage device according to the one embodiment of the present invention will be described in detail.

(Positive electrode)

The positive electrode includes a positive substrate and a positive active material layer disposed on the positive substrate directly or with an intermediate layer interposed therebetween. The intermediate layer and the positive active material layer may be disposed only on one side or on both surfaces of the positive substrate.

The positive substrate has conductivity. It is determined whether or not the positive substrate has "conductivity" by using a volume resistivity of $10^{-2}$ $\Omega \cdot$cm as a threshold, the volume resistivity being measured in accordance with JIS-H-0505 (1975). As a material of the positive substrate, a metal such as aluminum, titanium, tantalum, and stainless steel, or an alloy thereof is used. Among these metals and alloys, single element aluminum or an aluminum alloy is preferable from the viewpoints of electric potential resistance, high conductivity, and costs. Examples of the positive substrate include a foil, a deposited film, a mesh, and a porous material, and a foil is preferable from the viewpoint of costs.

The positive substrate preferably includes a metal aluminum layer in at least a part thereof. The metal aluminum layer may be a layer of single element aluminum or an aluminum alloy. The positive substrate may consist of only one metal aluminum layer, or may be a layered product including a metal aluminum layer and another layer. In the positive substrate, a positive active material layer-side surface layer thereof, that is, a layer in contact with the positive active material layer or the intermediate layer is preferably the metal aluminum layer. The positive substrate includes the metal aluminum layer and thereby enables, for example, exhibition of good conductivity. The positive substrate that consists of only the metal aluminum layer may be an aluminum foil or an aluminum alloy foil. Examples of the single element aluminum or aluminum alloy include A1085, A3003, and A1N30 specified in JIS-H-4000 (2014) or JIS-H-4160

(2006).

The average thickness of the positive substrate is preferably 3 $\mu$m or more and 50 $\mu$m or less, more preferably 5

μm or more and 40 μm or less, still more preferably 8 μm or more and 30 μm or less, particularly preferably 10 μm or more and 25 μm or less. Setting the average thickness of the positive substrate to the above range enables an increase in the energy density per volume of the all-solid-state energy storage device while increasing the strength of the positive substrate. The average thickness of the metal aluminum layer is preferably 1 μm or more and 50 μm or less, more preferably 5 μm or more and 40 μm or less, still more preferably 8 μm or more and 30 μm or less, particularly preferably 10 μm or more and 25 μm or less. The average thickness is defined as an average value of thicknesses measured at any five points.

The intermediate layer is a layer disposed between the positive substrate and the positive active material layer. The intermediate layer is preferably a layer containing a carbon material. The positive electrode includes the intermediate layer and thereby enables, for example, an increase in the adhesiveness between the positive substrate and the positive active material layer, and reduction of contact resistance between the positive substrate and the positive active material layer.

The carbon material is a material containing elemental carbon as a main constituent element, except for non-carbonized polymer compounds. The main constituent element refers to an element contained in the largest amount based on mass. For example, the content proportion of the elemental carbon in the carbon material may be 80 mass% or more, 90 mass% or more, 95 mass% or more, 99 mass% or more, or 99.9 mass% or more. The carbon material may include an element, such as elemental oxygen and elemental nitrogen, other than the elemental carbon. The carbon material may be a material having conductivity (conductive carbon). Examples of the carbon material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. As the carbon material, a carbon material including at least one of CNTs or carbon black is preferably used, and a carbon material singly including CNTs is more preferably used. One or two or more of the carbon materials can be used.

The content of the carbon material in the intermediate layer is adjusted as appropriate according to the mechanical, electric, and thermal properties and the like required of the intermediate layer to be aimed at, but the content is preferably 0.1 mass% or more and 99.9 mass% or less, more preferably 1 mass% or more and 99 mass% or less, still more preferably 10 mass% or more and 98 mass% or less. The lower limit of the content of the carbon material in the intermediate layer may be 10 mass%, 25 mass%, or 60 mass%.

The intermediate layer preferably further contains a resin. When the intermediate layer contains a resin, this resin functions as a binder and thereby enables, for example, an increase in the adhesiveness between particles of the carbon material and between the layers (between the positive substrate and the intermediate layer, and between the intermediate layer and the positive active material layer).

The resin contained in the intermediate layer preferably has a low solubility in a solvent (a volatile component contained in the positive active material layer) contained in a positive composite paste described later in detail and used for forming the positive active material layer. In other words, the Hansen sphere formed by plotting the Hansen solubility parameters of the resin in a Hansen space preferably encompasses no coordinates of the Hansen solubility parameters of the volatile component contained in the positive active material layer. In this case, the dissolution of the resin of the intermediate layer is particularly sufficiently suppressed, enabling a further increase in the adhesiveness between the substrate and the positive active material layer.

Particularly, the resin contained in the intermediate layer preferably has no solubility in at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof. The carboxylic acid ester, the ketone, the trifluoroalkylbenzene containing a $CF_3$ group at an end thereof, and a bis(trifluoroalkyl)benzene containing a $CF_3$ group at an end thereof are solvents having a relatively low polarity and having high performance of dissolving a binder used for the positive active material layer. Therefore, when the positive composite paste containing such a solvent is used for forming the positive active material layer, and the resin contained in the intermediate layer has no solubility in the solvent, the adhesiveness between the substrate and the positive active material layer can further be increased. Specific examples of these solvents suitably used for the positive composite paste will be described later.

Since the above-described solvents having a relatively low polarity are suitably used as the solvents for preparing the positive composite paste, the resin contained in the intermediate layer preferably has a high solubility in a solvent having, in contrast, a relatively high polarity. That is, a solvent having a relatively high polarity is preferably used as a solvent for an intermediate layer-forming material (intermediate layer-forming paste). Examples of such a solvent include solvents such as: water; amides such as N,N-dimethylformamide (DMF), N,N-dimethylacetamide (DMAc), and N-methyl-2-pyrrolidone (NMP); alcohols such as methanol, ethanol, isopropanol, and n-propanol; glycol ethers such as ethylene glycol monoethyl ether, ethylene glycol monobutyl ether, and propylene glycol monomethyl ether; and glycols such as ethylene glycol and propylene glycol. Among these solvents, water is particularly preferable from the viewpoint of costs. These solvents can each be used singly, or two or more thereof can be used in mixture.

The resin contained in the intermediate layer is not particularly limited, but preferred is a resin that has no solubility in the above-described solvents having a relatively low polarity but that has a high solubility in the above-described solvents having a relatively high polarity. Since water is particularly preferably used as the solvent for the intermediate layer-forming material, especially preferred is a resin having water solubility, for example, polyacrylic acid, poly(ammonium acrylate), poly(sodium acrylate), carboxymethylcellulose sodium, water-soluble cellulose ether, sodium alginate, polyvinyl alcohol, polystyrenesulfonic acid, and polyethylene glycol. Particularly more preferred are polyacrylic acid, poly(ammonium acrylate), poly(sodium acrylate), and carboxymethylcellulose sodium.

The content of the resin in the intermediate layer is adjusted as appropriate according to the mechanical, electric, and thermal properties and the like required of the intermediate layer to be aimed at, but the content is preferably 0.1 mass% or more and 99 mass% or less, more preferably 1 mass% or more and 90 mass% or less.

The intermediate layer preferably contains substantially no elemental sulfur. The content of the elemental sulfur in the intermediate layer is, for example, preferably 0.1 mass% or less, more preferably 0.01 mass% or less, still more preferably 0.001 mass% or less.

The intermediate layer may further contain a component, such as a dispersant and a crosslinking agent, other than the carbon material and the resin. The addition amount of these other components can be adjusted as appropriate according to, for example, the solvent used for the intermediate layer-forming material, the positive substrate, the viscosity required of the intermediate layer-forming material, and the film shape required of the intermediate layer. The total content of the carbon material and the resin in the intermediate layer is preferably 80 mass% or more and 100 mass% or less, more preferably 90 mass% or more and 100 mass% or less.

The average thickness of the intermediate layer as a single layer is preferably 1 nm or more and 20 $\mu$m or less, more preferably 1 nm or more and 1 $\mu$m or less, still more preferably 1 nm or more and 500 nm or less, in terms of, for example, sufficiently increasing the adhesiveness between the positive substrate and the positive active material layer, and reducing the internal resistance of the all-solid-state energy storage device.

The intermediate layer can be obtained by applying the intermediate layer-forming material (for example, a paste containing the carbon material and the resin) to the positive substrate and drying the material. A commercially available product including a positive substrate and an intermediate layer stacked thereon can also be used.

The positive active material layer contains a sulfur-based active material, conductive carbon, a sulfide solid electrolyte, and a binder. The positive active material layer can be molded from a so-called positive composite paste containing the sulfur-based active material and the like. The positive active material layer contains, as necessary, an optional component such as a thickener and a filler.

The sulfur-based active material is a component that functions as a positive active material. The sulfur-based active material may be elemental sulfur, a sulfur compound, or a mixture thereof. Examples of the sulfur compound include metal sulfides such as lithium sulfide, and organic sulfur compounds such as organic disulfide compounds and carbon sulfide compounds. The sulfur-based active material has advantages such as a high theoretical capacity and low costs. One or two or more of the sulfur-based active materials can be used.

The content of the sulfur-based active material in the positive active material layer is preferably 20 mass% or more and 70 mass% or less, more preferably 30 mass% or more and 60 mass% or less, still more preferably 35 mass% or more and 55 mass% or less. When the content of the sulfur-based active material falls within the above range, for example, the charge capacity can further be increased. The content of each of the components other than the volatile component in the positive active material layer is the content based on the components (all solid content) except for the volatile component.

The positive active material layer may contain a positive active material other than the sulfur-based active material. However, the content of the sulfur-based active material with respect to all the positive active materials contained in the positive active material layer is preferably 90 mass% or more and 100 mass% or less, more preferably 99 mass% or more and 100 mass% or less.

The conductive carbon is a carbon material having conductivity. The conductive carbon preferably has porosity, that is, the conductive carbon is preferably porous carbon. The porous carbon is generally a porous inorganic material containing elemental carbon as a main constituent element. As the porous carbon, active carbon or the like can be used. As the conductive carbon, conductive carbon, such as carbon black and carbon nanotubes, other than the porous carbon can also be used. One or two or more types of the conductive carbon can be used. As the conductive carbon, the porous carbon and other conductive carbon such as carbon black may be used in combination.

The lower limit of the content of the elemental carbon in the conductive carbon is preferably 70 mass%, more preferably 80 mass%, 90 mass%, 95 mass%, or 97 mass%. The upper limit of the content of the elemental carbon in the conductive carbon may be 100 mass% or 99.9 mass%. The content of the elemental carbon in the conductive carbon can be a combination of any of the above lower limits with the above upper limit. The conductive carbon may include an element, such as elemental oxygen and elemental nitrogen, other than the elemental carbon.

The content of the conductive carbon in the positive active material layer is preferably 5 mass% or more and 50 mass% or less, more preferably 10 mass% or more and 40 mass% or less, still more preferably 15 mass% or more and 30 mass% or less. When the content of the conductive carbon falls within the above range, for example, the charge capacity can further be increased.

The positive active material layer may further contain a conductive agent other than the conductive carbon. However, the content of the conductive carbon with respect to all the conductive agents contained in the positive active material layer is preferably 90 mass% or more and 100 mass% or less, more preferably 99 mass% or more and 100 mass% or less.

The sulfur-based active material and the conductive carbon (typically porous carbon) are preferably in the form of a composite. In the composite of the sulfur-based active material and the porous carbon, normally, the porous carbon carries in pores thereof the sulfur-based active material. The composite keeps such a form and thereby secures sufficient electronic conductivity, enabling, for example, an increase in charge-discharge performance. The composite may be powdery.

When the porous carbon as the conductive carbon is in the form of a composite with the sulfur-based active material, pores of the porous carbon are filled with sulfur-based active material, and further remaining pores can be filled with the sulfide solid electrolyte. In this case, the specific surface area of the mixture of these materials (the mixture of the sulfur-based active material, the porous carbon, and the sulfide solid electrolyte) is considerably smaller than the specific surface area of single element porous carbon or a composite of porous carbon and a sulfur-based active material. Accordingly, in this case, the binder can be attached to the surface of these materials at a high coverage, and therefore can, even with a small amount, exhibit particularly good binding properties.

The composite of the sulfur-based active material and the conductive carbon can be manufactured by a conventionally known method. For example, the composite can be obtained, for example, by heating a mixture of the sulfur-based active material and the conductive carbon to the melting point of the sulfur-based active material or higher, and thereafter cooling the mixture.

As the sulfide solid electrolyte, a conventionally known electrolyte can be used. Examples of the sulfide solid electrolyte include $Li_3PS_4$, $Li_2S\text{-}P_2S_5$, $Li_2S\text{-}P_2S_5\text{-}LiI$, $Li_2S\text{-}P_2S_5\text{-}LiCl$, $Li_2S\text{-}P_2S_5\text{-}LiBr$, $Li_2S\text{-}P_2S_5\text{-}Li_2O$, $Li_2S\text{-}P_2S_5\text{-}Li_2O\text{-}LiI$, $Li_2S\text{-}P_2S_5\text{-}Li_3N$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_{2n}$ (m and n are positive numbers, and Z is any of Ge, Zn, and Ga), $Li_2S\text{-}GeS_2$, $Li_2S\text{-}SiS_2\text{-}Li_3PO_4$, $Li_2S\text{-}SiS_2\text{-}Li_xMO_y$ (x and y are positive numbers, and M is any of P, Si, Ge, B, Al, Ga, and In), and $Li_{10}GeP_2S_{12}$. One or two or more of the sulfide solid electrolytes can be used.

The sulfide solid electrolyte is, in the positive active material layer, preferably present in the state of a mixed powder obtained by mixing with a composite of the sulfur-based active material and the conductive carbon, is, in the positive active material layer, also preferably present as a composite of the sulfur-based active material, the conductive carbon, and the sulfide solid electrolyte, and is, in the positive active material layer, more preferably present in the state of a mixed powder obtained by mixing with a composite of the sulfur-based active material, the conductive carbon, and the sulfide solid electrolyte.

The composite of the sulfur-based active material, the conductive carbon, and the sulfide solid electrolyte can be produced by a physical method or a chemical method. The physical method is a process of forming a composite by applying compression force, shear force, impact force, or the like. For example, the composite can be obtained, for example, by subjecting a composite of the sulfur-based active material and the conductive carbon, and the sulfide solid electrolyte to a mechanical milling treatment using a ball mill or the like. This treatment may be performed by dry milling or wet milling, but is preferably performed by dry milling. The chemical method is a method of forming a composite by a method accompanying a chemical change. Examples of the method include a method of reacting a raw material of the sulfide solid electrolyte with the surface of the sulfur-based active material and the conductive carbon, and a composite thereof, and thereby forming a composite of the sulfide solid electrolyte with the surface of the sulfur-based active material and the conductive carbon, and the composite thereof. Among the above processes of forming a composite, a physical method is preferable, and a mechanical milling treatment using a ball mill or the like is especially preferable.

The BET specific surface area of the mixed powder of the sulfur-based active material, the conductive carbon, and the sulfide solid electrolyte or the composite of the sulfur-based active material, the conductive carbon, and the sulfide solid electrolyte is preferably 10 $m^2/g$ or less, more preferably 7 $m^2/g$ or less. When the BET specific surface area of the mixed powder of the sulfur-based active material, the conductive carbon, and the sulfide solid electrolyte or the composite of the sulfur-based active material, the conductive carbon, and the sulfide solid electrolyte is relatively small as described above, the binder can cover the surface of the mixed powder or composite of these materials at a relatively high ratio, and therefore can further increase the binding properties. The lower limit of the BET specific surface area is not particularly limited, and may be 1 $m^2/g$ or 2 $m^2/g$.

The "BET specific surface area" is defined as a value obtained by the measurement with the following procedure. A measurement sample (1.00 g) is put in a sample tube for measurement. Next, by a nitrogen gas adsorption method using liquid nitrogen, an adsorption isotherm is measured in a relative pressure P/P0 (P0 = about 770 mmHg) range of 0 to 1. As the measurement apparatus, "autosorb iQ" manufactured by Quantachrome Instruments is used. Five points are extracted from a region with P/P0 = 0.05 to 0.3 of the adsorption isotherm obtained, BET plotting is then performed, and the BET specific surface area is calculated from the y-intercept and the slope of the straight line.

The sulfide solid electrolyte may be a crystalline material, a glassy material, or a crystallized glass (glass ceramic) material. The glassy material means a material in an X-ray diffraction measurement result of which no diffraction peak derived from a crystal is observed, or a diffraction peak derived from a crystal is observed but the peak intensity thereof is low (the material observed is mainly formed of an amorphous material). On the other hand, the crystallized glass (glass ceramic) material means a material in an X-ray diffraction measurement result of which a diffraction peak derived from a crystal is observed, and the crystalline material means a material in which a hollow pattern derived from a glassy material is not observed but only a diffraction peak derived from a crystal is observed.

The crystallized glass (glass ceramic) material may include an amorphous portion. That is, examples of the crystallized glass (glass ceramic) material include a mixed material of a glassy material and a crystalline material. In the one embodiment of the present invention, the sulfide solid electrolyte may be a glassy material. The glassy sulfide solid electrolyte has a high proportion of the amorphous portion, and therefore has relatively high flexibility. Especially, the use of the glassy sulfide solid electrolyte in the production of the composite of the sulfur-based active material, the conductive carbon, and the sulfide solid electrolyte easily makes the sulfide solid electrolyte fill pores of the composite of the sulfur-based active material, the conductive carbon, and the sulfide solid electrolyte, and therefore, the specific surface area of these materials tends to be decreased and the binding properties tend to be increased.

The content of the sulfide solid electrolyte in the positive active material layer is preferably 20 mass% or more and 60 mass% or less, more preferably 30 mass% or more and 55 mass% or less, still more preferably 35 mass% or more and 50 mass% or less. When the content of the sulfide solid electrolyte falls within the above range, for example, the charge capacity can further be increased.

The positive active material layer may also contain a solid electrolyte other than the sulfide solid electrolyte. However, the content of the sulfide solid electrolyte with respect to all the solid electrolytes contained in the positive active material layer is preferably 90 mass% or more and 100 mass% or less, more preferably 99 mass% or more and 100 mass% or less.

Examples of the binder include: thermoplastic resins such as fluororesins (e.g., polytetrafluoroethylene (PTFE), polyvinylidene fluoride (PVDF), and a vinylidene fluoride-hexafluoropropylene copolymer (PVDF-HFP)), polyolefins (e.g., polyethylene (PE) and polypropylene (PP)), polyacrylic, and polyimides; elastomers such as an ethylene-propylene-diene rubber (EPDM), sulfonated EPDM, a styrene butadiene rubber (SBR), and a fluororubber; and polysaccharide polymers. The binder is preferably a polymer containing no double bond. Examples of the polymer containing no double bond include fluororesins such as PTFE, PVDF, and PVDF-HFP, and polyolefins such as PE and PP. A fluororesin is preferable, and PVDF-HFP is particularly preferable. The use of such a binder enables, for example, an increase in the binding properties. One or two or more of the binders can be used.

The content of the binder in the positive active material layer is 0.1 mass% or more and less than 2.0 mass%. The lower limit of the content of the binder is preferably 0.3 mass%, and may be 0.5 mass% or 0.7 mass%. Setting the content of the binder to the above lower limit or more enables, for example, an increase in the adhesiveness between the positive substrate and the positive active material layer. The upper limit of the content of the binder is preferably 1.5 mass%, and may be 1.2 mass% or 0.8 mass%. Setting the content of the binder to the above upper limit or less enables, for example, an increase in the charge capacity, and an increase in the ratio of the initial charge capacity to the initial discharge capacity (hereinafter, the ratio of the charge capacity to the discharge capacity is also referred to as "adverse coulombic efficiency"). The content of the binder in the positive active material layer can be a combination of any of the above lower limits with the above upper limit.

Examples of the thickener include polysaccharide polymers such as carboxymethylcellulose and methylcellulose. When the thickener contains a functional group that is reactive with lithium and the like, the functional group may be deactivated by methylation or the like in advance. One or two or more of the thickeners can be used. When the positive active material layer contains the thickener, the content of the thickener in the positive active material layer is preferably 0.1 mass% or more and 8 mass% or less, more preferably 5 mass% or less, still more preferably 2 mass% or less. The technique disclosed herein can be carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, or artificial products thereof. One or two or more of the fillers can be used. When the positive active material layer contains the filler, the content of the filler in the positive active material layer can be set to 0.1 mass% or more and 8 mass% or less, and is normally preferably 5 mass% or less, more preferably 2 mass% or less. The technique disclosed herein can be carried out in an aspect in which the positive active material layer contains no filler.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W, as a solid component other than the sulfur-based active material, the other positive active material, the conductive carbon, the other conductive agent, the sulfide solid electrolyte, the other solid electrolyte, the binder, the thickener, and the filler.

The positive active material layer preferably further contains a volatile component having a boiling point at 1 atm of 220°C or lower. When the positive active material layer is formed by application and drying of the positive composite paste, the solvent used for the positive composite paste normally remains as the volatile component in the positive active material layer. The volatile component has a boiling point of preferably 50°C or higher and 200°C or lower, more preferably 80°C or higher and 180°C or lower.

The upper limit of a polar term $\delta_p$ as a Hansen solubility parameter of the volatile component is preferably 7.0 $(J/cm^3)^{1/2}$, more preferably 6.0 $(J/cm^3)^{1/2}$. When the positive active material layer is formed of the positive composite paste containing such a low-polarity solvent, the charge capacity of the all-solid-state energy storage device tends to be further increased. Examples of the volatile component (solvent) having a polar term $\delta p$ as a Hansen solubility parameter of 7.0 $(J/cm^3)^{1/2}$ or less include those shown in Table 3 described later. The lower limit of the polar term $\delta_p$ is preferably 0.1 $(J/cm^3)^{1/2}$, more preferably 1.0 $(J/cm^3)^{1/2}$. The polar term $\delta_p$ can be a combination of any of the above lower limits with the above upper limit.

The values of a dispersion term $\delta_d$, the polar term $\delta_p$, and a hydrogen bond term $\delta_h$ as Hansen solubility parameters of the volatile component respectively satisfy preferably all the ranges of $\delta_d \leq 20.0$ $(J/cm^3)^{1/2}$, $\delta_p \leq 7.0$ $(J/cm^3)^{1/2}$, and $\delta_h \leq 7.0$ $(J/cm^3)^{1/2}$, more preferably all the ranges of 14.8 $(J/cm^3)^{1/2} \leq \delta_d \leq 17.5$ $(J/cm^3)^{1/2}$, 1.0 $(J/cm^3)^{1/2} \leq \delta_p \leq 7.0$ $(J/cm^3)^{1/2}$, and 1.0 $(J/cm^3)^{1/2} \leq \delta_h \leq 7.0$ $(J/cm^3)^{1/2}$. The volatile component, that is, the solvent, satisfying such Hansen solubility parameters has high performance of dissolving the binder, particularly a fluororesin as the binder. Therefore, when the positive active material layer is formed of the positive composite paste containing such a solvent, the binder can, even with a small amount, exert particularly excellent binding properties, enabling, for example, a further increase in the charge capacity and a further increase in the adhesiveness between the substrate and the positive active material layer.

The volatile component, particularly the volatile component in which the value of the dispersion term $\delta_d$, the polar term $\delta_p$, and the hydrogen bond term $\delta_h$ as the Hansen solubility parameters respectively satisfy all the ranges of $\delta_d \leq 20.0$ $(J/cm^3)^{1/2}$, $\delta_p \leq 7.0$ $(J/cm^3)^{1/2}$, and $\delta_h \leq 7.0$ $(J/cm^3)^{1/2}$ preferably includes at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof. Such a volatile component, that is, the solvent, has higher performance of dissolving the binder, particularly a fluororesin as the binder. Therefore, when the positive active material layer is formed of the positive composite paste containing such a solvent, the binder can, even with a small amount, exert particularly excellent binding properties, enabling, for example, a further increase in the charge capacity and a further increase in the adhesiveness between the substrate and the positive active material layer.

Examples of the carboxylic acid ester include carboxylic acid alkyl esters such as butyl butyrate and butyl acetate. Examples of the ketone include aliphatic ketones such as diisobutyl ketone. Examples of the trifluoroalkylbenzene containing a $CF_3$ group at an end thereof include trifluoromethylbenzene and 2,2,2-trifluoroethylbenzene. Examples of the bis(trifluoroalkyl)benzene containing a $CF_3$ group at an end thereof include 1,2-bis(trifluoromethyl)benzene, 1,3-bis(trifluoromethyl)benzene, and 1,4-bis(trifluoromethyl)benzene.

One or two or more of the volatile components can be used. The volatile component may include, for example, a first volatile component as at least one selected from the group consisting of a fluorinated ether and a fluorinated alkane, and a second volatile component as at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof.

Examples of the fluorinated ether as the first volatile component include 1,1,2,2-tetrafluoroethyl-2,2,3,3-tetrafluoropropyl ether, (1,2,2,2-tetrafluoroethyl)(heptafluoropropyl) ether, ethyl-1,1,2,2-tetrafluoroethyl ether, and 1,1,1,2,3,4,4,5,5,5-decafluoro-3-methoxy-2-(trifluoromethyl)pentane. Examples of the fluorinated alkane as the first volatile component include 2H,3H-decafluoropentane, pentafluorobutane, 1H,6H-dodecafluorohexane, 1H-perfluorohexane, and 1H,1H,1H,2H,2H-nonafluorohexane.

Specific examples of the carboxylic acid ester, the ketone, and the trifluoroalkylbenzene containing a $CF_3$ group at an end thereof, and the bis(trifluoroalkyl)benzene containing a $CF_3$ group at an end thereof as the second volatile components are as described above. The values of a dispersion term $\delta_d$, a polar term $\delta_p$, and a hydrogen bond term $\delta_h$ as Hansen solubility parameters of the second volatile component preferably respectively satisfy all the ranges of 14.8 $(J/cm^3)^{1/2} \leq \delta_d \leq 17.5$ $(J/cm^3)^{1/2}$, 1.0 $(J/cm^3)^{1/2} \leq \delta_p \leq 7.0$ $(J/cm^3)^{1/2}$, and 1.0 $(J/cm^3)^{1/2} \leq \delta_h \leq 7.0$ $(J/cm^3)^{1/2}$.

The content of the volatile component in the positive active material layer may be, for example, 0.0001 mass% or more and 1 mass% or less, or 0.001 mass% or more and 0.1 mass% or less.

The average thickness of the positive active material layer as a single layer is preferably 30 μm or more and 1,000 μm or less, more preferably 60 μm or more and 500 μm or less. Setting the average thickness of the positive active material layer as a single layer to the above lower limit or more enables acquisition of the all-solid-state energy storage device with a high energy density. Setting the average thickness of the positive active material layer as a single layer to the above upper limit or less enables, for example, reduction in size of the all-solid-state energy storage device.

(Negative electrode)

The negative electrode includes a negative substrate and a negative active material layer disposed on the negative substrate directly or with an intermediate layer interposed therebetween. The intermediate layer and the negative active material layer may be disposed only on one side or on both surfaces of the negative substrate. The configuration of the intermediate layer is not particularly limited, and can be selected from, for example, the configurations described for the positive electrode.

The negative substrate has conductivity. As a material of the negative substrate, a metal such as copper, nickel, stainless steel, nickel-plated steel, and aluminum, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of costs. Accordingly, the negative substrate is preferably a copper foil or a copper alloy foil. Examples of the copper foil include a rolled copper foil and an electrolytic copper foil.

The average thickness of the negative substrate is preferably 2 $\mu$m or more and 35 $\mu$m or less, more preferably 3 $\mu$m or more and 30 $\mu$m or less, still more preferably 4 $\mu$m or more and 25 $\mu$m or less, particularly preferably 5 $\mu$m or more and 20 $\mu$m or less. Setting the average thickness of the negative substrate to the above range enables an increase in the energy density per volume of the all-solid-state energy storage device while increasing the strength of the negative substrate.

The negative active material layer contains a negative active material. The negative active material layer can be formed of a so-called negative composite paste containing a negative active material. The negative active material layer may contain a solid electrolyte. The negative active material layer contains, as necessary, an optional component such as a conductive agent, a binder, a thickener, and a filler. The types of the binder, the thickener, and the filler in the negative active material layer are the same components as in the positive active material layer described above. One or two or more of these optional components do not have to be substantially contained in the negative active material layer.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W, as a component other than the negative active material, the solid electrolyte, the conductive agent, the binder, the thickener, and the filler.

The negative active material can be selected as appropriate from known negative active materials. As a negative active material for a lithium ion secondary battery, a material capable of occluding and releasing lithium ions is normally used. Examples of the negative active material include metal lithium; metals or metalloids such as Si and Sn; metal oxides or metalloid oxides such as Si oxide, Ti oxide, and Sn oxide; titanium-containing oxides such as $Li_4Ti_5O_{12}$, $LiTiO_2$, and $TiNb_2O_7$; polyphosphoric acid compounds; silicon carbide; and carbon materials such as graphite and non-graphitic carbon (easily graphitizable carbon or hardly graphitizable carbon). Among these materials, graphite and non-graphitic carbon are preferable. In the negative active material layer, one of these materials may be used singly, or two or more thereof may be used in mixture.

The "graphite" refers to a carbon material in which the average lattice spacing ($d_{002}$) of the (002) plane determined by an X-ray diffraction method is 0.33 nm or more and less than 0.34 nm before charge-discharge or in a discharged state. Examples of the graphite include natural graphite and artificial graphite. Artificial graphite is preferable from the viewpoint that a material having stable physical properties can be obtained.

The "non-graphitic carbon" refers to a carbon material in which the average lattice spacing ($d_{002}$) of the (002) plane determined by an X-ray diffraction method is 0.34 nm or more and 0.42 nm or less before charge-discharge or in a discharged state. Examples of the non-graphitic carbon include hardly graphitizable carbon and easily graphitizable carbon. Examples of the non-graphitic carbon include a resin-derived material, a petroleum pitch or a petroleum pitch-derived material, a petroleum coke or a petroleum coke-derived material, a plant-derived material, and an alcohol-derived material.

Here, the "discharged state" means a state of the carbon material, as the negative active material, that is discharged by sufficiently releasing lithium ions that can be occluded and released in association with charge and discharge. For example, the "discharged state" of a half cell that includes, as a working electrode, a negative electrode containing a carbon material as a negative active material, and includes metal lithium as a counter electrode is that the half cell has an open circuit voltage of 0.7 V or higher.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is normally particles (powder). The average particle size of the negative active material can be set to, for example, 1 nm or more and 100 μm or less. When the negative active material is a carbon material, a titanium-containing oxide, or a polyphosphoric acid compound, the average particle size thereof may be 1 μm or more and 100 μm or less. When the negative active material is Si, Sn, Si oxide, Sn oxide, or the like, the average particle size thereof may be 1 nm or more and 1 μm or less. Setting the average particle size of the negative active material to the above lower limit or more facilitates manufacturing and handling of the negative active material. Setting the average particle size of the negative active material to the above upper limit or less improves the electron conductivity of the negative active material layer. The "average particle size" means a value corresponding to 50% in a volume-based integrated distribution calculated, in accordance with JIS-Z-8819-2 (2001), from a particle size distribution obtained by measuring a diluted solution, which is obtained by diluting particles with a solvent, by a laser diffraction/scattering method in accordance with JIS-Z-8825 (2013).

A crusher, a classifier, or the like is used to obtain a powder with a prescribed particle size. Examples of a crushing method include a method of using a mortar, a ball mill, a sand mill, a vibratory ball mill, a planetary ball mill, a jet mill, a counter jet mill, a whirling airflow-type jet mill, a sieve, or the like. Wet-type crushing that performs crushing in the presence of water or an organic solvent such as hexane can also be used. As a classification method, a sieve, a wind classifier, or the like is used in a dry or wet manner as necessary. When the negative active material is a metal such as metal lithium, the negative active material layer may have a foil shape.

The content of the negative active material in the negative active material layer is preferably 10 mass% or more and 100 mass% or less, more preferably 30 mass% or more and 95 mass% or less. The lower limit of the content is 50 mass%, and further, more preferably 70 mass%. When the negative active material is a metal such as metal lithium, the lower limit of the content of the negative active material in the negative active material layer may be 95 mass% or 99 mass%. Setting the content of the negative active material to the above range enables, for example, a further increase in the discharge capacity of the all-solid-state energy storage device.

As the solid electrolyte contained in the negative active material layer, a conventionally known solid electrolyte can be used. Examples of the solid electrolyte include sulfide solid electrolytes, oxide solid electrolytes, dry polymer electrolytes, gel polymer electrolytes, and pseudo-solid electrolytes. A sulfide solid electrolyte is preferable. Specific examples of the sulfide solid electrolyte include the materials described for the positive active material layer. One or two or more of the solid electrolytes can be used. The solid electrolyte used for the negative active material layer may be the same as or different from a solid electrolyte contained in another layer.

When the negative active material layer contains the solid electrolyte, the content of the solid electrolyte is preferably 5 mass% or more and 90 mass% or less, more preferably 20 mass% or more and 70 mass% or less. This upper limit is sometimes still more preferably 50 mass%. Setting the content of the solid electrolyte to the above range enables, for example, a further increase in the discharge capacity of the all-solid-state energy storage device.

The conductive agent is not particularly limited as long as the agent is a material having conductivity. Examples of such a conductive agent include metals and conductive ceramic as well as the conductive carbon described for the positive electrode. Examples of a shape of the conductive agent include a powdery shape and a fibrous shape. As the conductive agent, one of these materials may be used singly, or two or more thereof may be used in mixture. These materials may be used in the form of a composite. For example, a composite material of carbon black and carbon nanotubes may be used.

When the negative active material layer contains the conductive agent, the content of the conductive agent in the negative active material layer is preferably 1 mass% or more and 10 mass% or less, more preferably 3 mass% or more and 9 mass% or less. The content of the conductive agent in the negative active material layer may be 5 mass% or less, or 2 mass% or less. The technique disclosed herein can be carried out in an aspect in which the negative active material layer contains no conductive agent.

When the negative active material layer contains a binder, the content of the binder in the negative active material layer is preferably 0.1 mass% or more and 10 mass% or less, more preferably 0.5 mass% or more and 8 mass% or less. The content of the binder in the negative active material layer may be 5 mass% or less, or 2 mass% or less. The technique disclosed herein can be carried out in an aspect in which the negative active material layer contains no binder.

When the negative active material layer contains a thickener, the content of the thickener in the negative active material layer is preferably 0.1 mass% or more and 10 mass% or less, more preferably 0.5 mass% or more and 8 mass% or less. The content of the thickener in the negative active material layer may be 5 mass% or less, or 2 mass% or less. The technique disclosed herein can be carried out in an aspect in which the negative active material layer contains no thickener.

When the negative active material layer contains a filler, the content of the filler in the negative active material layer can be set to 0.1 mass% or more and 8 mass% or less, and is normally preferably 5 mass% or less, more preferably 2 mass% or less. The technique disclosed herein can be carried out in an aspect in which the negative active material layer contains no filler.

The average thickness of the negative active material layer as a single layer is preferably 30 μm or more and 1,000 μm or less, more preferably 60 μm or more and 500 μm or less. Setting the average thickness of the negative active material layer to the above lower limit or more enables acquisition of the all-solid-state energy storage device with a high energy density. Setting the average thickness of the negative active material layer 6 to the above upper limit or less enables, for example, reduction in size of the all-solid-state energy storage device.

(Solid electrolyte layer)

The solid electrolyte layer contains a solid electrolyte. As the solid electrolyte contained in the solid electrolyte layer, a conventionally known solid electrolyte can be used. Examples of the solid electrolyte include sulfide solid electrolytes, oxide solid electrolytes, dry polymer electrolytes, gel polymer electrolytes, and pseudo-solid electrolytes. A sulfide solid electrolyte is preferable. Specific examples of the sulfide solid electrolyte include the materials described for the positive active material layer. One or two or more of the solid electrolytes can be used. The solid electrolyte used for the solid electrolyte layer may be the same as or different from a solid electrolyte contained in another layer.

The content of the solid electrolyte in the solid electrolyte layer is preferably 70 mass% or more and 100 mass% or less, more preferably 90 mass% or more and 99.9 mass% or less.

The solid electrolyte layer may contain an optional component such as a binder, a filler, and another additive (e.g., a phosphoric acid compound such as $Li_3PO_4$, an oxide, and a halogen compound). The optional component such as a binder and a filler can be selected from the materials described for the positive active material layer.

The average thickness of the solid electrolyte layer is preferably 1 $\mu$m or more and 300 $\mu$m or less, more preferably 3 $\mu$m or more and 50 $\mu$m or less. Setting the average thickness of the solid electrolyte layer to the above lower limit or more makes it possible to highly certainly insulate the positive active material layer from the negative active material layer. Setting the average thickness of the solid electrolyte layer to the above upper limit or less makes it possible to increase the energy density of the all-solid-state energy storage device.

The shape of the all-solid-state energy storage device according to the present embodiment is not particularly limited, and examples of the shape include a cylindrical type, a prismatic type, a flat type, a coin type, and a button type.

<Method for manufacturing all-solid-state energy storage device>

A method, according to one embodiment of the present invention, for manufacturing an all-solid-state energy storage device includes applying a positive composite paste onto a substrate (positive substrate) directly or with an intermediate layer interposed therebetween. The manufacturing method may include, for example, preparing a positive electrode, preparing a negative electrode, preparing a solid electrolyte layer, and stacking the positive electrode and the negative electrode with the solid electrolyte layer interposed therebetween. The applying a positive composite paste may be one step in the preparing a positive electrode.

The positive composite paste contains a sulfur-based active material, conductive carbon, a sulfide solid electrolyte, and a binder. The positive composite paste normally further contains a solvent. The positive composite paste may further contain another optional component constituting the positive active material layer. The content of the binder with respect to all the solid content in the positive composite paste is less than 2.0 mass%. A suitable range of the content of the binder with respect to all the solid content in the positive composite paste is the same as the above-described suitable range of the content of the binder in the positive active material layer.

The solvent used for the positive composite paste preferably has a polar term $\delta_p$ as a Hansen solubility parameter of 7.0 $(J/cm^3)^{1/2}$ or less. A suitable form of the solvent used for the positive composite paste is the same as the suitable form of the volatile component contained in the positive active material layer. As the solvent, a second solvent as the above-described second volatile component may only be used, but is preferably used in combination with a first solvent as the above-described first volatile component.

The positive composite paste can be prepared by kneading, with the solvent, the components constituting the positive active material layer.

The application of the positive composite paste can be performed by a known method such as a doctor blade method, a die coating method, a gravure coating method, a spray coating method, a static coating method, and a bar coating method. By applying the positive composite paste, and thereafter performing drying and pressing as necessary, a positive electrode can be obtained.

The positive active material layer may be a coated layer. As an embodiment different from above, the positive active material layer may be provided by dry coating. The positive active material layer provided by dry coating normally contains no volatile component. As another different embodiment, the positive active material layer may be provided by a method other than coating.

The preparing a negative electrode may be producing a negative electrode. The negative electrode can, similarly to the positive electrode, be obtained, for example, by applying a negative composite paste onto a negative substrate directly or with an intermediate layer interposed therebetween, and thereafter performing drying and pressing as necessary. The negative electrode can also be obtained, for example, by stacking a foil-shaped negative active material layer on a negative substrate.

The preparing a solid electrolyte layer may be producing a solid electrolyte layer. The solid electrolyte layer can be obtained, for example, through application of a solid electrolyte layer-forming paste, and drying, pressing, and the like performed as necessary. The solid electrolyte layer can also be obtained, for example, by pressing of a powdery solid electrolyte layer-forming material.

The stacking the positive electrode and the negative electrode with the solid electrolyte layer interposed therebetween can be performed by, for example, the following procedure. The positive electrode is disposed on the solid electrolyte layer formed on a release substrate, so that the positive active material layer is in contact with the solid electrolyte layer. This stacked solid electrolyte layer and positive electrode are subjected to cold isostatic pressing (CIP). Thereafter, by further subjecting the stacked solid electrolyte layer and positive electrode to warm isostatic pressing (WIP), a layered product of the solid electrolyte layer and the positive electrode is obtained. Thereafter, the release substrate is removed, and the negative electrode is disposed on the surface of the solid electrolyte layer opposite from the positive electrode, so that the negative active material layer is in contact with the solid electrolyte layer. By subjecting this stacked negative electrode, solid electrolyte layer, and positive electrode to WIP, an electrode assembly that includes the positive electrode and the negative electrode stacked with the solid electrolyte layer interposed therebetween is obtained.

Alternatively, an electrode assembly may be obtained by first forming a layered product of the solid electrolyte layer and the negative electrode, and then stacking the positive electrode. Alternatively, an electrode assembly may be obtained by pressing the positive electrode, the solid electrolyte layer, and the negative electrode stacked on top of another, and thus integrating the positive electrode, the solid electrolyte layer, and the negative electrode through one-time pressing. After the electrode assembly is obtained, an all-solid-state energy storage device can be obtained through a known step such as inserting the electrode assembly into a case.

When a positive electrode including a positive substrate and a positive active material layer stacked thereon and having a content of a binder of 0.1 mass% or more and less than 2.0 mass%, and a solid electrolyte layer are disposed so that the positive active material layer is in contact with the solid electrolyte layer, and the positive electrode and the solid electrolyte layer are subjected to a pressing treatment, such as CIP, for integration, the positive substrate and the positive active material layer are easily peeled from each other after the pressing treatment. This peeling is considered to occur because the amount of the binder in the positive active material layer is small, and therefore, the adhesiveness between the positive substrate and the positive active material layer is low. In contrast, by using a positive electrode that includes, between a positive substrate and a positive active material layer, an intermediate layer containing a carbon material, the peeling between the positive substrate and the positive active material layer after the pressing treatment can be suppressed.

<Energy storage apparatus>

The all-solid-state energy storage device according to the present embodiment can be mounted as an energy storage unit (battery module) configured by putting together a plurality of all-solid-state energy storage devices, for the use of, for example, a power source for motor vehicles such as an electric vehicle (EV), a hybrid vehicle (HEV), and a plug-in hybrid vehicle (PHEV), a power source for electronic devices such as a personal computer and a communication terminal, or a power source for power storage. In this case, the technique of the present invention may be applied to at least one of the all-solid-state energy storage devices included in the energy storage unit.

FIG. 3 shows one example of an energy storage apparatus 40 formed by putting together energy storage units 30 each of which is formed by putting together two or more all-solid-state energy storage devices 10 electrically connected to each other. The energy storage apparatus 40 may include, for example, a busbar (not shown) electrically connecting the two or more all-solid-state energy storage devices 10, and a busbar (not shown) electrically connecting two or more energy storage units 30. The energy storage units 30 or the energy storage apparatus 40 may include a state monitor (not shown) that monitors the state of one or more of the all-solid-state energy storage devices 10.

<Other embodiments>

The all-solid-state energy storage device and the method for manufacturing an all-solid-state energy storage device according to the present invention are not limited to the embodiments described above, and various changes may be added without departing from the scope of the present invention. For example, to the configuration of an embodiment, the configuration of another embodiment can be added, or a part of the configuration of an embodiment can be replaced with the configuration of another embodiment or a well-known technique. Further, a part of the configuration of an embodiment can be removed. In addition, a well-known technique can be added to the configuration of an embodiment.

In the above embodiments, although the case where the all-solid-state energy storage device is used as a chargeable and dischargeable all-solid-state secondary battery has been described, the type, the shape, the size, the capacity, and the like of the all-solid-state energy storage device are optional. The present invention can also be applied to various secondary batteries, and capacitors such as an electric double-layer capacitor and a lithium ion capacitor.

<Examples>

Hereinafter, the present invention will be described more specifically by way of examples, but the present invention is not limited to the following examples.

[Example 1]

(Production of sulfur-porous carbon composite)

Sulfur (manufactured by Sigma-Aldrich Co. LLC) and active carbon ("MH-00" manufactured by TOYO TANSO CO., LTD.) as porous carbon were mixed at a mass ratio of 70 : 30. This mixture was set in a sealed electric furnace. The temperature of the electric furnace was raised to 150°C at a temperature rise rate of 5°C/min, and the mixture was held for 5 hours and then left to cool to 80°C which is a sulfur-solidifying temperature. Thereafter, the temperature was raised again to 300°C at a temperature rise rate of 5°C/min, and the mixture was held for 2 hours and thus heat-treated, and left to cool to room temperature. A sulfur-porous carbon composite was thus obtained.

(Production of mixed powder (sulfur-porous carbon-solid electrolyte composite))

The obtained sulfur-porous carbon composite and a sulfide solid electrolyte ($Li_3PS_4$ glass) were mixed at a mass ratio of 60 : 40. This mixture was charged into a sealed 80-mL zirconia pot containing 100 g of 4-mm-diameter zirconia balls. These steps were performed under an argon atmosphere with a dew point of -50°C or lower. Next, the mixture was subjected to a mechanical milling treatment performed by a planetary ball mill (manufactured by FRITSCH GmbH, model number: Premium line PL-7) at a revolution speed of 300 rpm for 15 minutes to obtain a mixed powder (sulfur-porous carbon-solid electrolyte composite).

(Preparation of positive composite paste)

A mixed solvent was prepared by mixing 1,1,2,2-tetrafluoroethyl-2,2,3,3-tetrafluoropropyl ether and trifluoromethylbenzene at a mass ratio of 70 : 30. PVDF-HFP (soluble in trifluoromethylbenzene) as a binder was dissolved in the mixed solvent to obtain a binder solution. The mixed powder (sulfur-porous carbon-solid electrolyte composite) (99.5 parts by mass) produced above was mixed with the prepared binder solution so that the amount of the PVDF-HFP was 0.5 parts by mass (in terms of solid content), and the mixture was kneaded by a rotation-revolution mixer to obtain a kneaded product. The kneaded product had added thereto the mixed solvent of 1,1,2,2-tetrafluoroethyl-2,2,3,3-tetrafluoropropyl ether and trifluoromethylbenzene prepared above, and was further kneaded by a rotation-revolution mixer to obtain a positive composite paste (solid content rate: 35 mass%).

(Production of positive electrode)

The positive composite paste obtained above was applied to an aluminum foil as a positive substrate so that the basis weight of solid content was 6 mg/cm$^2$ or more and 8 mg/cm$^2$ or less, the paste was dried at 80°C and ambient pressure for 30 minutes, and next dried at 80°C and reduced pressure for 30 minutes to form a positive active material layer. By the procedure described above, a positive electrode that included the positive active material layer having a content of the binder of 0.5 mass% was obtained.

(Production of all-solid-state energy storage device)

The positive electrode obtained above was punched out into a 10-mm-diameter circle. Into a ceramic powder forming device having an inner diameter of 10 mm, an argyrodite solid electrolyte ($Li_6PS_5Cl$) (80 mg) was inserted, and press-formed by uniaxial pressing at a pressure of 50 MPa for several seconds to form a solid electrolyte layer. After releasing the pressure, the positive electrode was stacked on one surface of the solid electrolyte layer with the positive active material layer facing the solid electrolyte layer, and the layered product was pressed by uniaxial pressing at 400 MPa for 5 minutes. After releasing the pressure, an In foil (manufactured by The Nilaco Corporation, average thickness 100 $\mu$m, diameter 10 mm) and a Li foil (manufactured by Honjo Metal Co., Ltd., average thickness 100 $\mu$m, diameter 8 mm) were stacked on the surface of the solid electrolyte layer opposite from the surface on which the positive electrode had been stacked, and the layered product was pressed by uniaxial pressing at a pressure of 50 MPa for several seconds. The layered product was taken out of the ceramic powder forming device to obtain an all-solid-state energy storage device of Example 1.

[Example 2]

An all-solid-state energy storage device of Example 2 that included a positive electrode including a positive active material layer having a content of the binder of 1.0 mass% was obtained similarly to Example 1 except that in the preparation of the positive composite paste, the mixed powder (sulfur-porous carbon-solid electrolyte composite) (99.0 parts by mass) was mixed with the binder solution so that the amount of the PVDF-HFP was 1.0 parts by mass (in terms of solid content).

[Comparative Example 1]

An all-solid-state energy storage device of Comparative Example 1 that included a positive electrode including a positive active material layer having a content of the binder of 3.0 mass% was obtained similarly to Example 1 except that in the preparation of the positive composite paste, the mixed powder (sulfur-porous carbon-solid electrolyte composite) (97.0 parts by mass) was mixed with the binder solution so that the amount of the PVDF-HFP was 3.0 parts by mass (in terms of solid content).

[Evaluation] (Charge-discharge test)

The all-solid-state energy storage devices of Examples 1 and 2 and Comparative Example 1 were subjected to a charge-discharge test. The discharge was performed by constant current discharge with the current set to 0.1 C and the lower-limit voltage to 0.7 V. The charge was performed by constant current charge with the current set to 0.1 C and the upper-limit voltage to 2.4 V. After the discharge, a pause of 10 minutes was provided. The current 1C was defined as a current of 1675 mA/g per unit mass of sulfur. The initial discharge capacity, the initial charge capacity, and the initial adverse coulombic efficiency (percentage of the charge capacity with respect to the discharge capacity) were obtained. Table 1 shows the results. The discharge capacity and the charge capacity shown in Table 1 both represent the capacity per unit mass of sulfur.

[Table 1]

|  | Content of binder | Initial discharge capacity | Initial charge capacity | Initial adverse coulombic efficiency |
|---|---|---|---|---|
|  | mass% | mAh/g | mAh/g | % |
| Example 1 | 0.5 | 1385 | 1176 | 84.9 |
| Example 2 | 1.0 | 956 | 670 | 70.1 |
| Comparative Example 1 | 3.0 | 1007 | 236 | 23.5 |

As shown in Table 1, the all-solid-state energy storage devices of Examples 1 and 2 that included a positive active material layer having a content of the binder of 0.1 mass% or more and less than 2.0 mass% had an initial charge capacity of 600 mAh/g or more and thus had a high initial charge capacity. The all-solid-state energy storage devices of Examples 1 and 2 had an initial adverse coulombic efficiency of 70% or more and thus also had a high initial adverse coulombic efficiency.

[Example 3]

(Production of sulfur-porous carbon composite)

A sulfur-porous carbon composite was obtained by the same procedure as in Example 1.

(Production of mixed powder (sulfur-porous carbon-solid electrolyte composite))

A mixed powder (sulfur-porous carbon-solid electrolyte composite) was obtained by the same procedure as in Example 1 except that the sulfur-porous carbon composite and the sulfide solid electrolyte ($Li_3PS_4$ glass) were mixed at a mass ratio of 65 : 35.

(Preparation of positive composite paste)

A positive composite paste was obtained by the same procedure as in Example 1 except that the mixed powder (sulfur-porous carbon-solid electrolyte composite) (99.0 parts by mass) produced above was mixed with the binder solution so that the amount of the PVDF-HFP was 1.0 parts by mass (in terms of solid content).

(Production of positive electrode)

A layered product (manufactured by Nissan Chemical Corporation) was prepared that included an aluminum foil as a positive substrate, and a carbon-coated layer disposed thereon as an intermediate layer containing a carbon material and a resin. The positive composite paste obtained above was applied onto the carbon-coated layer of the layered product, dried at 80°C and ambient pressure for 30 minutes, and next dried at 80°C and reduced pressure for 30 minutes to form a positive active material layer. By the procedure described above, a positive electrode that included a positive active material layer having a content of the binder of 1.0 mass% was obtained.

(Production of frame)

A saturated polyester (manufactured by UNITIKA LTD., elitel (registered trade name) UE-3500) having a softening point of 80°C and exhibiting flowability at a temperature of 200°C or lower was dissolved in N-methyl-2-pyrrolidone (NMP) to prepare a 25 mass% solution. The obtained solution was applied to a 25-pm-thick polyimide substrate and then dried to obtain a 45-pm-thick substrate. The obtained substrate was cut out into a 25 mm $\times$ 25 mm square, in the center of which a 20.2 mm $\times$ 20.2 mm opening was formed to give a frame. The saturated polyester exhibits no tackiness at 25°C.

(Production of all-solid-state energy storage device)

The positive electrode obtained above was punched out into a 20-mm-side square.
A solid electrolyte layer was disposed on a release substrate and punched out into a 25-mm-side square to give a layered product A. The solid electrolyte layer was formed by mixing an argyrodite solid electrolyte ($Li_6PS_5Cl$) and an SBR-based binder at a mass ratio of 95 : 5 in butyl butyrate as a solvent, applying the obtained solid electrolyte layer-forming paste to a release substrate, and drying the paste.
A 25-mm-side negative electrode was prepared that included a copper foil as a negative substrate, and a metal lithium foil disposed thereon as a negative active material layer.
In a glovebox with an argon atmosphere, the saturated polyester-applied surface of the frame was placed on the solid electrolyte layer of the layered product A, and the positive electrode was disposed in the opening of the frame, so that the positive active material layer was in contact with the solid electrolyte layer, to give a layered product B. The obtained layered product B was sealed in a flexible sealing material in a glovebox with an argan atmosphere under reduced pressure. Thereafter, the layered product B sealed in the sealing material was taken out of the glovebox, and subjected to CIP under the conditions of 25°C and 200 MPa to temporarily bond the solid electrolyte layer, the frame, and the positive electrode. After the temporary bonding, the layered product B sealed in the sealing material was taken out therefrom in a glovebox, and re-sealed in a flexible sealing material under reduced pressure. Subsequently, the layered product B sealed in the sealing material was subjected to WIP under the conditions of 120°C and 1000 MPa to bond the solid electrolyte layer, the frame, and the positive electrode. Thereafter, in a glovebox with an argon atmosphere, the sealing material was opened, the layered product B was taken out, the release substrate was peeled from the layered product B, and the negative electrode was disposed on the solid electrolyte layer, so that the surface thereof on which the release substrate had been disposed was in contact with the negative active material layer, to give a layered product C. The layered product C was sealed in a flexible sealing material under reduced pressure. Thereafter, the layered product C sealed in the sealing material was taken out of the glovebox, and subjected to CIP under the conditions of 25°C and 100 MPa to obtain an all-solid-state energy storage device of Example 3 that included the positive electrode and the negative electrode stacked with the solid electrolyte layer interposed therebetween.
The porous carbon, the sulfur-porous carbon composite, the sulfide solid electrolyte, and the mixed powder (sulfur-porous carbon-solid electrolyte composite) used or produced in the production of the positive electrode of Example 3 were subjected to measurement of BET specific surface area. The results are as follows.

Porous carbon: 1519 $m^2/g$
Sulfur-porous carbon composite: 36.49 $m^2/g$
Sulfide solid electrolyte: 1.354 $m^2/g$
Mixed powder (sulfur-porous carbon-solid electrolyte composite): 4.577 $m^2/g$

It could be confirmed that the mixed powder (sulfur-porous carbon-solid electrolyte composite) has a considerably smaller specific surface area than the specific surface area of a sulfur-porous carbon composite containing no solid electrolyte.

[Example 4]

An all-solid-state energy storage device of Example 4 that included a positive electrode including a positive active material layer having a content of the binder of 0.5 mass% was obtained similarly to Example 3 except that in the preparation of the positive composite paste, the mixed powder (sulfur-porous carbon-solid electrolyte composite) (99.5 parts by mass) was mixed with the binder solution so that the amount of the PVDF-HFP was 0.5 parts by mass (in terms of solid content).

[Example 5]

An all-solid-state energy storage device of Example 5 that included a positive electrode including a positive active material layer having a content of the binder of 0.3 mass% was obtained similarly to Example 3 except that in the preparation of the positive composite paste, the mixed powder (sulfur-porous carbon-solid electrolyte composite) (99.7 parts by mass) was mixed with the binder solution so that the amount of the PVDF-HFP was 0.3 parts by mass (in terms of solid content).

[Example 6]

An all-solid-state energy storage device of Example 6 was obtained similarly to Example 3 except that in the production of the positive electrode, an aluminum foil was used in place of the layered product including an aluminum foil and a carbon-coated layer (intermediate layer) disposed thereon.

[Example 7]

An all-solid-state energy storage device of Example 7 was obtained similarly to Example 4 except that in the production of the positive electrode, an aluminum foil was used in place of the layered product including an aluminum foil and a carbon-coated layer (intermediate layer) disposed thereon.

[Evaluation] (Adhesiveness)

The all-solid-state energy storage devices of Examples 3 to 7 were, in the following manner, evaluated for adhesiveness between the positive substrate and the positive active material layer after the CIP performed on the layered product B in the production stage. The positive substrate of the layered product B having undergone the CIP was pinched and lifted with suction tweezers. The case was evaluated as A when the layered product B was lifted without causing peeling between the positive substrate and the positive active material layer, and the case was evaluated as B when peeling was caused between the positive substrate and the positive active material layer. Table 2 shows the results.

[Table 2]

| | Positive electrode | | Adhesiveness |
|---|---|---|---|
| | Content of binder | Intermediate layer | |
| | mass% | - | - |
| Example 3 | 1.0 | With | A |
| Example 4 | 0.5 | With | A |
| Example 5 | 0.3 | With | A |
| Example 6 | 1.0 | Without | B |
| Example 7 | 0.5 | Without | B |

As shown in Table 2, in the all-solid-state energy storage devices of Examples 3 to 5 that included the intermediate layer between the positive substrate and the positive active material layer, the adhesiveness between the positive substrate and the positive active material layer was high and peeling between the positive substrate and the positive active material layer was not caused, despite the positive active material layer having a small content of the binder. In contrast, in the all-solid-state energy storage devices of Examples 6 and 7 that included no intermediate layer between the positive substrate and the positive active material layer, the adhesiveness between the positive substrate and the positive active material layer was low and peeling between the positive substrate and the positive active material layer was caused.

The results and the like of Examples 1 to 5 indicate that an all-solid-state energy storage device that includes a positive active material layer having a content of a binder of 0.1 mass% or more and less than 2.0 mass% and that includes an intermediate layer between a positive substrate and the positive active material layer can achieve both a high discharge capacity and high adhesiveness between the positive substrate and the positive active material layer.

(Performance of dissolving binder)

The relationship of the performance of dissolving a binder with the HSP value and the SP value of solvents was studied in the following manner. Regarding the performance of dissolving a binder, a fluororesin (PVDF-HFP) (0.2 g) as the binder and each solvent (3.8 g) were put in a glass container, and stirred with a magnetic stirrer for 12 hours or longer. The case was evaluated as A when no undissolved portion of the binder was observed in the obtained binder solution, and the case was evaluated as B when an undissolved portion of the binder was observed or when the binder was hardly dissolved.

Regarding the HSP values and the SP value of the solvents, the HSP values (dispersion term $\delta_d$, polar term $\delta_p$, and hydrogen bond term $\delta_h$) and the SP value $\sigma_t$ were calculated through structure calculation on the basis of the chemical structure of each of the solvents. For the calculation, the Y-MB method in the DYI program of Hansen Solubility Parameters in Practice (HSPiP) ver. 5.4.03 was used. The relationship between the SP value $\sigma_t$ and the HSP values (dispersion term $\delta_d$, polar term $\delta_p$, and hydrogen bond term $\delta_h$) is represented by the following equation (1).

$$\sigma_t 2 = \delta_d 2 + \delta_p 2 + \delta_h 2 \ ... \ (1)$$

Tables 3 shows the relationship between the HSP values (dispersion term $\delta_d$, polar term $\delta_p$, and hydrogen bond term $\delta_h$) and the SP value of the solvents and the performance of dissolving the binder. The unit of the values is $(J/cm^3)^{1/2}$.

[Table 3]

| Solvent | HSP values | | | SP value | Performance of dissolving binder |
|---|---|---|---|---|---|
| | $\delta_d$ | $\delta_p$ | $\delta_h$ | $\sigma_t$ | |
| 1,1,2,2-Tetrafluoroethyl-2,2,2-trifluoroethyl ether | 14.1 | 5.0 | 4.0 | 15.5 | B |
| 1,1,2,2-Tetrafluoroethyl-2,2,3,3-tetrafluoropropyl ether | 14.6 | 5.2 | 4.7 | 16.2 | B |
| Heptane | 15.2 | 0.1 | 0.1 | 15.2 | B |
| 1,3-Bis(trifluoromethyl)benzene | 15.4 | 2.4 | 1.4 | 15.7 | A |
| Diisobutyl ketone | 15.5 | 4.2 | 2.5 | 16.3 | A |
| Decane | 15.6 | 0.1 | 0.1 | 15.6 | B |
| 1,4-bis(trifluoromethyl)benzene | 15.6 | 3.1 | 2.3 | 16.0 | A |
| Methyl isobutyl ketone | 15.6 | 5.7 | 3.9 | 17.0 | A |
| Butyl butyrate | 15.9 | 3.8 | 5.0 | 17.1 | A |
| Butyl acetate | 15.9 | 4.7 | 6.2 | 17.7 | A |
| (Trifluoromethyl)benzene | 16.4 | 2.6 | 2.6 | 16.8 | A |
| Mesitylene | 17.9 | 2.9 | 3.1 | 18.4 | B |
| m-Xylene | 18.0 | 2.3 | 2.3 | 18.3 | B |
| Toluene | 18.0 | 2.6 | 3.3 | 18.5 | B |
| Anisole | 18.3 | 4.9 | 5.6 | 19.7 | B |
| Tetralin | 18.7 | 1.9 | 2.6 | 18.9 | B |
| Acetophenone | 18.7 | 6.8 | 4.5 | 20.4 | B |

Table 3 clarifies the following. The solvents 1,3-bis(trifluoromethyl)benzene, (trifluoromethyl)benzene, butyl butyrate, and butyl acetate, in which the values of the dispersion term $\delta_d$, the polar term $\delta_p$, and the hydrogen bond term $\delta_h$ respectively satisfied all the ranges of 14.8 $(J/cm^3)^{1/2} \leq \delta_d \leq$ 17.5 $(J/cm^3)^{1/2}$, 1.0 $(J/cm^3)^{1/2} \leq \delta_p \leq$ 7.0 $(J/cm^3)^{1/2}$, and 1.0 $(J/cm^3)^{1/2} \leq \delta_h \leq$ 7.0 $(J/cm^3)^{1/2}$, had good performance of dissolving the binder (A). In contrast, the solvents that did not satisfy any one of the ranges had no good performance of dissolving the binder (B), the solvents are namely the fluorinated ethers 1, 1,2,2-tetrafluoroethyl-2,2,2-trifluoroethyl ether and 1,1,2,2-tetrafluoroethyl-2,2,3,3-tetrafluoropropyl ether in which the dispersion term $\delta_d$ was less than 14.8 $(J/cm^3)^{1/2}$, m-xylene, mesitylene, toluene, tetralin, and anisole in which the dispersion term $\delta_d$ was more than 17.5 $(J/cm^3)^{1/2}$, and heptane and decane in which the polar term $\delta_p$ and the hydrogen bond term $\delta_h$ were less than 1.0 $(J/cm^3)^{1/2}$. Table 3 also clarified that even the solvents, such as decane and 1,3-bis(trifluoromethyl)benzene, having close SP values have different performance of dissolving the binder.

The present invention can be applied to all-solid-state energy storage devices and the like used as power sources for electronic devices such as a personal computer and a communication terminal, motor vehicles, and the like.

**Claims**

1. An all-solid-state energy storage device comprising a positive electrode that includes a positive active material layer,

   the positive active material layer containing a sulfur-based active material, conductive carbon, a sulfide solid electrolyte, and a binder, and
   the positive active material layer having a content of the binder of 0.1 mass% or more and less than 2.0 mass%.

2. The all-solid-state energy storage device according to claim 1, wherein the positive active material layer further contains a volatile component having a boiling point at 1 atm of 220°C or lower, and the volatile component has a polar term $\delta_p$ as a Hansen solubility parameter of 7.0 $(J/cm^3)^{1/2}$ or less.

3. The all-solid-state energy storage device according to claim 1 or 2, wherein
   the positive electrode further includes:

   a substrate including a metal aluminum layer in at least a part thereof; and
   an intermediate layer that is disposed between the substrate and the positive active material layer, and contains a carbon material.

4. The all-solid-state energy storage device according to claim 2, wherein

   the positive electrode further includes:

   a substrate including a metal aluminum layer in at least a part thereof; and
   an intermediate layer that is disposed between the substrate and the positive active material layer, and contains a carbon material,

   the intermediate layer further contains a resin, and
   a Hansen sphere formed by plotting a Hansen solubility parameter of the resin in a Hansen space encompasses no coordinates of Hansen solubility parameters of the volatile component.

5. The all-solid-state energy storage device according to claim 4, wherein values of a dispersion term $\delta_d$, the polar term $\delta_p$, and a hydrogen bond term $\delta_h$ as the Hansen solubility parameters of the volatile component respectively satisfy all ranges of 20.0 $(J/cm^3)^{1/2}$ or less, 7.0 $(J/cm^3)^{1/2}$ or less, and 7.0 $(J/cm^3)^{1/2}$ or less.

6. The all-solid-state energy storage device according to claim 4 or 5, wherein the resin has no solubility in at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof.

7. The all-solid-state energy storage device according to claim 2 or 4 to 6, wherein the volatile component includes at least one selected from the group consisting of a carboxylic acid ester, a ketone, a trifluoroalkylbenzene containing a $CF_3$ group at an end thereof, and a bis(trifluoroalkyl)benzene containing a $CF_3$ group at an end thereof.

8. The all-solid-state energy storage device according to claim 1 to 7, wherein the binder is a polymer containing no double bond.

9. The all-solid-state energy storage device according to claim 8, wherein the binder is a fluororesin.

10. A method for manufacturing an all-solid-state energy storage device, the method comprising applying a positive composite paste onto a substrate directly or with an intermediate layer interposed therebetween,

the positive composite paste containing a sulfur-based active material, conductive carbon, a sulfide solid electrolyte, and a binder, and

the positive composite paste having, with respect to all solid content thereof, a content of the binder of less than 2.0 mass%.

11. The method for manufacturing an all-solid-state energy storage device according to claim 10, wherein

the positive composite paste further contains solvent, and

the solvent has a polar term $\delta_p$ as a Hansen solubility parameter of 7.0 $(J/cm^3)^{1/2}$ or less.

## FIG. 1

10

## FIG. 2

20

## FIG. 3

40

Europäisches
Patentamt

European
Patent Office

Office européen
des brevets

# EUROPEAN SEARCH REPORT

**Application Number**

EP 25 16 4375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/090445 A1 (THE SCHOOL CORPORATION KANSAI UNIV [JP]; GS YUASA INT LTD [JP]) 25 May 2023 (2023-05-25) * example 1 * ----- | 1-11 | INV. H01M4/13 H01M4/133 H01M4/1393 H01M4/36 |
| A | US 2016/028107 A1 (KUBO HIROKI [JP] ET AL) 28 January 2016 (2016-01-28) * claims 3, 4; examples 1-3 * ----- | 1-11 | H01M4/587 H01M4/62 H01M4/66 H01M10/052 H01M10/0562 |

**TECHNICAL FIELDS SEARCHED (IPC)**

H01M

The present search report has been drawn up for all claims

| Place of search | Date of completion of the search | Examiner |
|---|---|---|
| Munich | 19 August 2025 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4375

This annex lists the patent family members relating to the patent documents cited in  the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | | Publication date |
|---|---|---|---|---|
| WO 2023090445 A1 | 25-05-2023 | CN | 118339690 A | 12-07-2024 |
| | | EP | 4383389 A1 | 12-06-2024 |
| | | JP | 7672651 B2 | 08-05-2025 |
| | | JP | 2023076354 A | 01-06-2023 |
| | | US | 2025015262 A1 | 09-01-2025 |
| | | WO | 2023090445 A1 | 25-05-2023 |
| US 2016028107 A1 | 28-01-2016 | CN | 105304863 A | 03-02-2016 |
| | | JP | 2016025027 A | 08-02-2016 |
| | | US | 2016028107 A1 | 28-01-2016 |

EPO FORM P0459

For more details about this annex : see Official Journal of the European Patent Office, No. 12/82

**REFERENCES CITED IN THE DESCRIPTION**

**Patent documents cited in the description**

- JP 2020119761 A